(19) Europäisches Patentamt
European Patent Office
Office européen des brevets

(11)  EP 2 679 975 A2

(12)  **EUROPÄISCHE PATENTANMELDUNG**

(43) Veröffentlichungstag:
01.01.2014  Patentblatt 2014/01

(51) Int Cl.:
*G01M 3/28* (2006.01)

(21) Anmeldenummer: 13173128.3

(22) Anmeldetag: 21.06.2013

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **28.06.2012  DE 102012211132**

(71) Anmelder: **GEZE GmbH
71229 Leonberg (DE)**

(72) Erfinder: **Dr. Hucker, Matthias
76359 Marxzell (DE)**

(54)  **Vorrichtung und Verfahren zur Erkennung eines Bruchs einer Flüssigkeitsleitung**

(57)  Es wird eine Vorrichtung zur Erkennung einer Undichtigkeit eines fluiddurchströmten Leitungssystems beschrieben. Im Leitungssystem sind mindestens zwei Durchflussmesseinrichtungen vorhanden, welche jeweils energieautark ausgebildet sind, indem sie einen Energiewandler aufweisen, welcher die Strömungsenergie eines das Leitungssystem durchströmenden Fluids in elektrische Energie zum Betrieb einer Sensoreinrichtung umwandelt. Das Leitungssystem umfasst mindestens zwei Leitungsstränge, wobei in jedem Leitungsstrang mindestens eine Durchflussmesseinrichtung angeordnet ist, wobei eine Vergleichseinrichtung zum Vergleich der Ausgangssignale der Durchflussmesseinrichtungen vorhanden ist.

Fig. 2

EP 2 679 975 A2

**Beschreibung**

Die Erfindung betrifft eine Vorrichtung zur Erkennung einer Undichtigkeit eines fluiddurchströmten Leitungssystems nach dem Oberbegriff des Patentanspruchs 1 sowie ein Verfahren zur Erkennung einer Undichtigkeit eines fluiddurchströmten Leitungssystems nach dem Oberbegriff des Patentanspruchs 6.

Aus der DE 10 2008 030 702 A1 ist eine energieautark ausgebildete Durchflussmesseinrichtung bekannt. Diese weist einen Energiewandler auf, welcher die Strömungsenergie eines eine Leitung durchströmenden Fluids in elektrische Energie zum Betrieb einer Sensoreinrichtung umwandelt. Mittels der Durchflussmesseinrichtung kann die Strömungsgeschwindigkeit des Fluids bestimmt werden, jedoch gibt diese Druckschrift keinerlei Anregung, eine in der Leitung auftretende Undichtigkeit zu erkennen.

Der Erfindung liegt die Aufgabe zugrunde, eine Vorrichtung sowie ein Verfahren zur Erkennung einer Undichtigkeit eines fluiddurchströmten Leitungssystems zu schaffen. Die Vorrichtung soll insbesondere einfach montierbar und wartungsfrei sein.

Die Aufgabe wird durch die Merkmale des Patentanspruchs 1 sowie des Patentanspruchs 6 gelöst.

Die Unteransprüche bilden vorteilhafte Ausgestaltungsmöglichkeiten der Erfindung.

Das Leitungssystem umfasst mindestens zwei Leitungsstränge, wobei in jedem Leitungsstrang mindestens eine Durchflussmesseinrichtung angeordnet ist, wobei eine Vergleichseinrichtung zum Vergleich der Ausgangssignale der Durchflussmesseinrichtungen vorhanden ist.

Die Durchflussmesseinrichtungen können jeweils eine Sensoreinrichtung aufweisen, wobei die Sensoreinrichtung von dem Energiewandler mit Energie versorgt wird, wenn die Durchflussmesseinrichtung von einem Fluid durchströmt wird.

Die Sensoreinrichtung kann ferner eine Berechnungseinrichtung aufweisen, durch welche aus der Ausgangsspannung des Energiewandlers eine Strömungsgeschwindigkeit des Fluids ermittelbar ist. In vorteilhafter Ausgestaltung kann auch die Berechnungseinrichtung von dem Energiewandler mit Energie versorgt werden.

Die Durchflussmesseinrichtungen können jeweils eine Sendeeinrichtung aufweisen. In vorteilhafter Ausgestaltung kann auch die Sendeeinrichtung von dem Energiewandler mit Energie versorgt werden.

Dadurch, dass alle Energieverbraucher der Durchflussmesseinrichtung von dem Energiewandler versorgt werden, kann die Durchflussmesseinrichtung ohne Zuleitungen zu einem elektrischen Energieversorgungsnetz betrieben werden, was den Montageaufwand deutlich reduziert. Ferner kann die Durchflussmesseinrichtung ohne einen elektrischen Energiespeicher betrieben werden und ist damit quasi wartungsfrei.

Die Ausgangssignale der Durchflussmesseinrichtungen können jeweils über eine Übertragungsstrecke der Vergleichseinrichtung zugeleitet werden. In vorteilhafter Ausgestaltung kann die Übertragungsstrecke drahtlos, z.B. als Funk- oder Infrarotstrecke ausgebildet sein. Auch dies minimiert den Montageaufwand und erhöht die Flexibilität.

Im Nachfolgenden wird ein Ausführungsbeispiel in der Zeichnung anhand der Figuren näher erläutert.

Dabei zeigen:

Fig. 1    eine schematische Darstellung einer Durchflussmesseinrichtung;

Fig. 2    eine schematische Darstellung eines Leitungssystems mit einer Vorrichtung zur Erkennung einer Undichtigkeit des Leitungssystems.

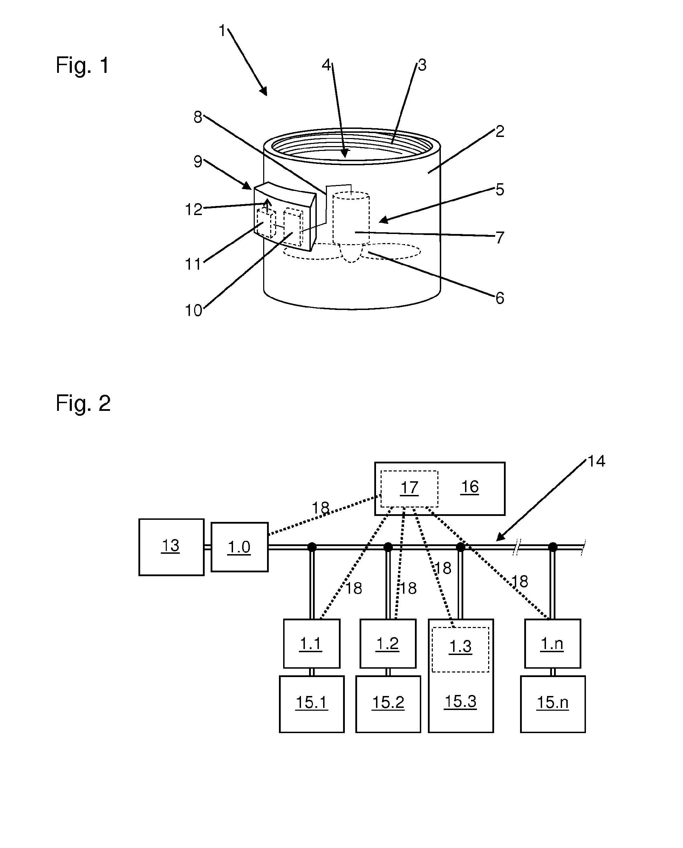

In der Fig. 1 ist eine Durchflussmesseinrichtung 1 schematisch dargestellt. Die Durchflussmesseinrichtung 1 umfasst ein Rohrstück 2, welches über ein eine Verbindungseinrichtung 3, hier z.B. ein Innengewinde, mit einer Fluidleitung verbindbar ist. Im Innenraum 4 des Rohrstücks 2 ist ein Energiewandler 5 angeordnet, welcher einen Generator 7 und einen auf dessen Antriebswelle drehfest montierten Propeller 6 umfasst.

Der Propeller 6 ist so ausgerichtet und ausgebildet, dass er durch ein den Innenraum 4 des Rohrstücks 2 durchströmendes Fluid in Drehung versetzt werden kann und somit auf den Generator 7 antreibt, wobei die Drehzahl des Energiewandlers 5 abhängig von der Strömungsgeschwindigkeit des Fluids ist.

Der Energiewandler 5 ist über eine elektrische Leitung 8 mit einer Sensoreinrichtung 9 verbunden. Die Sensoreinrichtung 9 umfasst eine Berechnungseinrichtung 10, welche aus einem Eingangssignal, konkret der gemessenen, von dem Generator 7 drehzahlabhängig erzeugten Spannung, als Ausgangssignal die Strömungsgeschwindigkeit des Fluids berechnet. Aus der Strömungsgeschwindigkeit ist wiederum - unter Kenntnis des Strömungsquerschnitts der Durchflussmesseinrichtung und einem Zeitsignal, beispielsweise von einer integrierten Zeituhr - die Menge des durchströmenden Fluids ermittelbar, was ebenfalls in der Berechnungseinrichtung 10 geschehen kann.

Das Ausgangssignal der Berechnungseinrichtung 10 wird einer Sendeeinrichtung 11 mit Antenne 12 zugeleitet, welcher ebenfalls Bestandteil der Sensoreinrichtung 9 ist. Die Sensoreinrichtung 9 ist somit energieautark betreibbar, indem alle Komponenten der Sensoreinrichtung 9 von dem Generator 7 mit elektrischer Energie versorgt werden, d.h. es werden weder Zuleitungen zu einem elektrischen Energieversorgungsnetz noch elektrische Energiespeicher benötigt. Auch die Signalübertragung benötigt keine Leitungen.

Fig. 2 zeigt in schematischer Darstellung ein mehrfach verzweigtes, fluiddurchströmtes Leitungssystem 14, welches beispielsweise als Wasserleitungssystem eines Gebäudes ausgebildet sein kann. In einem ersten Leitungsstrang, konkret einer Zuleitung 13, welche z.B. mit einem Wasserversorgungsnetz verbunden ist, strömt Fluid in das Leitungssystem 14 ein. Das Leitungssystem 14 weist eine Vielzahl von Abzweigungen auf, wobei die abzweigenden Leitungssträngen jeweils zu einer Ableitung 15 führen. Die Ableitungen 15.1-15.n können konkret als Verbrauchsstellen des durch das Leitungssystem 14 bereitgestellten Wassers ausgebildet sein, z.B. als Wasserhahn, Dusche, Spülmaschine, Waschmaschine usw.

Der Zuleitung 13 ist eine erste Durchflussmesseinrichtung 1.0 zugeordnet, indem diese zwischen der Zuleitung 13 und dem Leitungssystem 14 montiert ist und somit von dem aus der Zuleitung 13 in das Leitungssystem 14 strömenden Fluid durchströmt wird.

Jeder der Ableitungen 15.1-15.n ist jeweils eine separate Durchflussmesseinrichtung 1.1-1.n zugeordnet, welche jeweils entweder zwischen dem betreffenden Leitungsstrang des Leitungssystems 14 und der jeweiligen Ableitung 15.1-15.n montiert ist oder auch in der Ableitung 15.1-15.n integriert angeordnet sein kann. D.h. diese Durchflussmesseinrichtungen 1.1-1.n werden jeweils von dem aus dem jeweiligen Strang des Leitungssystems 14 in die Ableitung 15.1-15.n strömenden Fluid durchströmt.

Alle Durchflussmesseinrichtungen leiten ihre Ausgangssignale über jeweils eine Signalübertragungsstrecke 18, welche vorteilhafterweise drahtlos, z.B. per Funksignal ausgebildet ist, einer Empfangseinrichtung 17 einer Vergleichseinrichtung 16 zu.

Wie bereits beschrieben, kann mittels der der Zuleitung 13 zugeordneten Durchflussmesseinrichtung 1.0 der gesamte Durchfluss $D_0$ aus der Zuleitung 13 in das Leitungssystem 14 ermittelt werden. Ferner ist aus den Ausgangssignalen der anderen Durchflussmesseinrichtungen 1.1-1.n jeweils der Durchfluss $D_1$-$D_n$ durch eine der Ableitungen 15.1-15.n ermittelbar.

Die Vergleichseinrichtung 16 vergleicht nun den Durchfluss $D_0$ der Zuleitung 13 mit der Summe der Durchflüsse $D_1$-$D_n$ der Ableitungen 15.1-15.n, beispielsweise nach folgender Formel:

$$D_0 = \sum_{n=1}^{n} D_n$$

Falls $D_0$ größer ist als die Summe $D_1$-$D_n$, liegt in dem Leitungssystem 14 eine Undichtigkeit, beispielsweise ein Rohrbruch vor, und die Vergleichseinrichtung 16 generiert ein entsprechendes, diesen Zustand anzeigendes Ausgangssignal. Dieses kann vorzugsweise automatisch zur Einleitung einer Sicherheitsreaktion führen, indem es beispielsweise einem Aktor zugeleitet wird, welcher ein in der Zuleitung 13 des Leitungssystems 14 angeordnetes, hier nicht dargestelltes Absperrventil betätigt. Ferner kann beim Vorliegen dieses Ausgangssignal eine optische und/oder akustische Meldung generiert werden.

Liste der Referenzzeichen

| 1 | Durchflussmesseinrichtung |
|---|---|
| 2 | Rohrstück |
| 3 | Innengewinde |
| 4 | Innenraum |
| 5 | Energiewandler |
| 6 | Propeller |
| 7 | Generator |
| 8 | Leitung |
| 9 | Sensoreinrichtung |
| 10 | Berechnungseinrichtung |
| 11 | Sendeeinrichtung |
| 12 | Antenne |
| 13 | Zuleitung |
| 14 | Leitungssystem |
| 15 | Ableitung |
| 16 | Vergleichseinrichtung |
| 17 | Empfangseinrichtung |
| 18 | Signalübertragungsstrecke |
| D | Durchfluss |

**Patentansprüche**

1. Vorrichtung zur Erkennung einer Undichtigkeit eines fluiddurchströmten Leitungssystems (14), mit mindestens zwei Durchflussmesseinrichtungen (1), wobei die Durchflussmesseinrichtungen (1) jeweils energieautark ausgebildet sind, indem sie einen Energiewandler (5) aufweisen, welcher die Strömungsenergie eines das Leitungssystem (14) durchströmenden Fluids in elektrische Energie zum Betrieb einer Sensoreinrichtung (9) umwandelt, **dadurch gekennzeichnet,** **dass** das Leitungssystem (14) mindestens zwei Leitungsstränge umfasst, wobei in jedem Leitungsstrang mindestens eine Durchflussmesseinrichtung (1) angeordnet ist, wobei eine Vergleichseinrichtung (16) zum Vergleich der Ausgangssignale der Durchflussmesseinrichtungen (1) vorhanden ist.

2. Vorrichtung nach Anspruch 1, **dadurch gekennzeichnet, dass** die Durchflussmesseinrichtungen (1) jeweils eine Sensoreinrichtung (9) aufweisen, wobei die Sensoreinrichtung (9) von dem Energiewandler (5) mit Energie versorgt wird, wenn die Durchflussmesseinrichtung (1) von einem Fluid durchströmt wird.

3. Vorrichtung nach Anspruch 2, **dadurch gekennzeichnet, dass** die Sensoreinrichtung (9) eine Berechnungseinrichtung (10) aufweist, durch welche aus der Ausgangsspannung des Energiewandlers (5) eine Strömungsgeschwindigkeit des Fluids ermittelbar ist.

4.  Vorrichtung nach einem der vorhergehenden Ansprüche,
    **dadurch gekennzeichnet, dass** die Durchflussmesseinrichtungen (1) jeweils eine Sendeeinrichtung (11) aufweisen.

5.  Vorrichtung nach einem der vorhergehenden Ansprüche,
    **dadurch gekennzeichnet, dass** die Ausgangssignale der Durchflussmesseinrichtungen (1) jeweils über eine Übertragungsstrecke (18) der Vergleichseinrichtung (16) zugeleitet werden.

6.  Verfahren zur Erkennung einer Undichtigkeit eines fluiddurchströmten Leitungssystems (14),
    wobei in dem Leitungssystem (14) mindestens zwei Durchflussmesseinrichtungen (1) angeordnet sind, welche jeweils energieautark ausgebildet sind, indem sie einen Energiewandler (5) aufweisen, welcher die Strömungsenergie eines das Leitungssystem (14) durchströmenden Fluids in elektrische Energie zum Betrieb einer Sensoreinrichtung (9) umwandelt,
    **dadurch gekennzeichnet,**
    **dass** das Leitungssystem (14) mindestens zwei Leitungsstränge aufweist, wobei in jedem Leitungsstrang mindestens eine Durchflussmesseinrichtung (1) angeordnet ist,
    wobei eine Vergleichseinrichtung (16) das Ausgangssignal mindestens einer der Durchflussmesseinrichtungen (1) mit dem Ausgangssignal mindestens einer weiteren Durchflussmesseinrichtung (1) vergleicht.

7.  Verfahren nach Anspruch 6,
    **dadurch gekennzeichnet, dass** der Durchfluss $(D_0)$ der Zuleitung (13) des Leitungssystems (14) mit dem Durchfluss $(D_1-D_0)$ mindestens einer Ableitung (15.1-15.n) verglichen wird.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008030702 A1